# EUROPEAN PATENT SPECIFICATION

(11) **EP 1 919 114 B1**
(45) Date of publication and mention of the grant of the patent: **03.03.2010**
(21) Application number: 06123302.9
(22) Date of filing: 31.10.2006
(51) Int. Cl.: H04L 1/00, H04L 1/18

(54) **Method and apparatus for resegmentation of data packets for HARQ retransmission**
Verfahren und Vorrichtung zur Wiedersegmentierung von Datenpaketen für HARQ Wiederübertragung
Procédé et dispositif de resegmentation de paquets de données pour retransmission HARQ

(43) Date of publication of application: 07.05.2008
(73) Proprietor: Research In Motion Limited, Waterloo, Ontario N2L 3W8 (CA)
(72) Inventor: Suzuki, Takashi, Ichikawa, 272-0836 (JP); Womack, James, Bedford, Texas 76022 (US); Young, Gordon, Waterloo, Nova Scotia N2L 3W8 (CA)
(74) Representative: Moore, Barry

(56) References cited:
- EP-A- 1 487 161
- WO-A2-2004/043017
- US-A1- 2002 021 714

## Description

The present disclosure relates generally to the hybrid automatic repeat request (HARQ) scheme used in a media access control (MAC) layer data transmission, the radio link control (RLC) layer, and radio resource control (RRC) layer and in particular their interworking with respect to retransmission of data upon unsuccessful MAC protocol data unit reception.

In UMTS high speed download packet access (HSDPA) and enhanced dedicated uplink transport channel (E-DCH), collectively known as HSPA, use an HARQ scheme within the MAC layer to enhance the efficiency and reliability of data transmission between user equipment (UE) and the base station known as the Node B. This is, for example, defined in the 3GPP TS25.321 version 6.9.0 specification at sections 11.6 and 11.8. In HSDPA, the receiver side (UE) indicates the channel quality to the transmitter (Node B) using a 5 bit channel quality indicator (CQI) based on short term measurements of the pilot channel signal strength. These measurements can take approximately 2 ms.

Based on the reported CQI, the Node B will choose a transport block size and modulation and coding scheme (MCS) for the next transmission to the UE so that the transport block error probability should not exceed 10%.

Data is sent in the high-speed medium access control protocol data unit (MAC-hs PDU). When the UE receives the MAC-hs PDU, it computes a cyclic redundancy check (CRC) to determine correct reception. If the reception is successful, the UE sends an ACK to the Node B. If not, a NACK is sent. If the Node B receives a NACK, it retransmits the MAC-hs PDU again for Chase combining or the systematic and/or parity symbols for Incremental Redundancy if the number of retransmissions is within the specified maximum number as set by system operator. Incremental redundancy or a Chase Combining Scheme is used for the retransmission, as specified in 3GPP TS 25.212, version 6.9.0.

When the maximum number of HARQ retransmissions fail, as referred to herein as HARQ retransmission failure, retransmission of MAC-hs PDU is considered a failure. The acknowledged mode of operation of the radio link control (RLC), as defined in 3GPP TS25.322, version 6.8.0, sections 9.7 and 11.3, recovers the HARQ transmission error by retransmitting the RLC-PDUs originally multiplexed into the MAC-hs PDU which is indicated as not being received by the receiver side. This functionality is generally referred to as Automatic Repeat-reQuest or ARQ. This is based on the transmitter polling the receiver for the status of PDUs that it has or hasn't received and the receiver send this information back to the transmitter for processing. This two way signaling clearly adds a degree of additional latency in the transmission period of the incorrectly received data between the transmitter and the receiver.

In order to reduce this RLC level retransmission latency, the RLC can be notified of the HARQ retransmission failure and the RLC service data unit (RLC-SDU) or part of the RLC-SDU (the RLC-PDUs) can be retransmitted on the notification rather than waiting for a status report control message from the receiving side. An example of this type of enhancement is indicated in the RAN2 meeting number 55 contribution R2-062906 from NTT DoCoMo for the work item "Long-term evolution of UMTS Terrestrial Radio Access (UTRA) and Universal Terrestrial Radio Access Network (UTRAN)" (LTE). The result of 3GPP study on LTE is shown in the 3GPP TR25.912 version 7.0.0 specification. However, second or subsequent attempts may fail again due to the relatively long lasting bad radio conditions due to shadowing or other factors. In particular the size of the RLC-PDU that is re-transmitted is the same as the previous transmissions. In UMTS, the size of this RLC-PDU is determined during segmentation of the RLC-SDU as determined by the RRC configuration of RLC.

W02004/043017 A2 discloses a system in which a container used in the transmission of a MAC-hs PDU is re-sized. The system is limited to reducing a container size upon HARQ retransmission failure.

### GENERAL

The present disclosure may address the issue above for the improvement of retransmission latency further by re-segmenting data into more appropriate sizes according to radio channel conditions such as shadowing, among others. Further, the present disclosure may address when the re-segmentation of data should occur.

The present application may provide a method for handling Hybrid Automatic Repeat Request, hereafter referred to as HARQ, retransmission failure, HARQ retransmission failure being determined by whether a maximum number of HARQ retransmissions from a transmitter to a receiver have failed, the method comprising the steps of: determining an out-of-coverage condition, wherein: by checking whether a time between a time of the last reception of a channel quality indicator, hereafter referred to as CQI, and a time of HARQ retransmission failure is longer than a threshold; or if the number of consecutive failures in reception of an acknowledgement, hereafter referred to as ACK, or negative acknowledgement, hereafter referred to as NACK, from the receiver exceeds a configurable threshold value; if an out of coverage condition is determined, ending the retransmission process; and if not, checking whether changes to HARQ transmission error performance characteristics are greater than a threshold and/or a deterioration of channel conditions is less than a threshold; if yes, resegmenting a Radio Link Control Service Data Unit, hereafter referred to as RLC-SDU, comprising Radio Link Control Protocol Data Units, hereafter referred to as RLC-PDU data, or a RLC-PDU data, into smaller PDU data sizes; and transmitting said resegmented RLC-PDU data; and if not yes, transmitting previous RLC-PDU data.

The present application may further provide a transmitter for a mobile network adapted to re-segment data according to radio channel conditions based on Hybrid Automatic Repeat Request, hereafter referred to as HARQ, retransmission failure, HARQ retransmission failure being determined by whether a maximum number of HARQ retransmissions have failed, the transmitter comprising a re-segmentation layer adapted to: determine whether an out-of-coverage condition is indicated, wherein the out-of-coverage condition is determined: by checking whether a time between a time of last reception of a channel quality indicator, hereafter referred to as CQI, and a time of the HARQ retransmission failure is longer than a threshold; or if the number of consecutive failures in reception of an acknowledgement, hereafter referred to as ACK, or negative acknowledgement, hereafter referred to as NACK, from the receiver exceeds a configurable threshold value; if an out of coverage condition is determined, end the retransmission process; and if not, check whether changes to the HARQ transmission error performance characteristics are greater than a threshold and/or a deterioration of channel conditions is indicated or less than threshold; if yes, resegment an RLC-SDU comprising RLC-PDU data, or a RLC-PDU data, into smaller PDU data sizes; and transmit said resegmented RLC-PDU data; and if not yes, transmit previous RLC-PDU data.

Further, the application provides a communication network comprising the transmitter and a plurality of User Equipments, hereinafter referred to as UEs, capable of receiving packet data transmission from said transmitter.

The application further provides a computer readable medium comprising program code executable by a computing device or system to perform the method.

### BRIEF DESCRIPTION OF THE DRAWINGS

The present application will be better understood with reference to the drawings in which:
**Figure 1** is a block diagram showing a long-term evolution user plane protocol stack;
Figure 2 is a block diagram showing a long-term evolution control plane protocol architecture;
Figure 3 is a flow chart showing a method for a retransmission and re-segmentation decision within MAC layer in accordance with the present disclosure;
Figure 4 is a flow chart showing a method for retransmission and re-segmentation execution according to the present disclosure and the decision made in the Figure 3;
Figure 5 is a flow chart illustrating the configuration of the MAC layer both at the receiver and transmitter sides;
Figure 6 is a block diagram showing a flow chart of the indication of a handover from both the Node B and the UE sides;
Figure 7 is a block diagram showing interaction between the RRC, RLC and MAC layers where retransmission and re-segmentation is executed in the MAC and RLC in accordance with the present system and method; and
Figure 8 is a block diagram showing an alternative interaction between the RRC, RLC and MAC layers where retransmission and re-segmentation is executed in the MAC.

### DESCRIPTION OF PREFERRED EMBODIMENTS

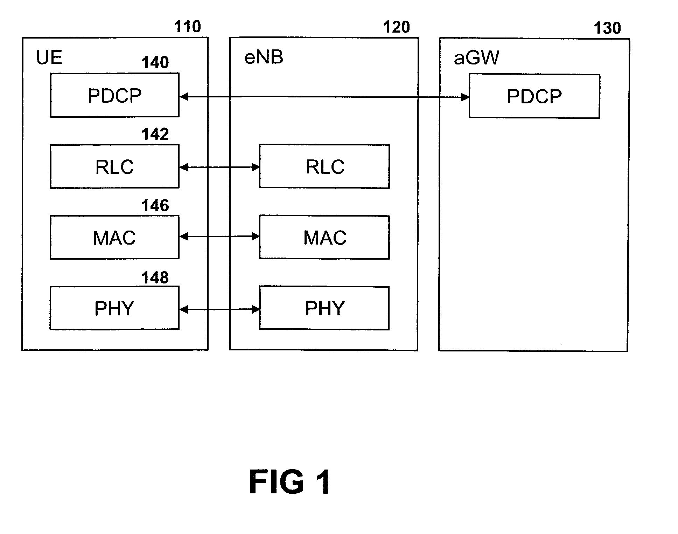

Reference is now made to the drawings. Figure 1 shows a block diagram illustrating the long-term evolution (LTE) user plane protocol stack.

A UE 110 communicates with both an evolved Node B (eNB) 120 and an access gateway (aGW) 130.

Various layers are illustrated in the protocol stack. The packet data convergence protocol (PDCP) layer 140 is illustrated both on the UE 110 and on aGW 130. The PDCP layer 140 performs internet protocol (IP) header compression and decompression, transfer of user data and maintenance of sequence numbers (SN) for radio bearers.

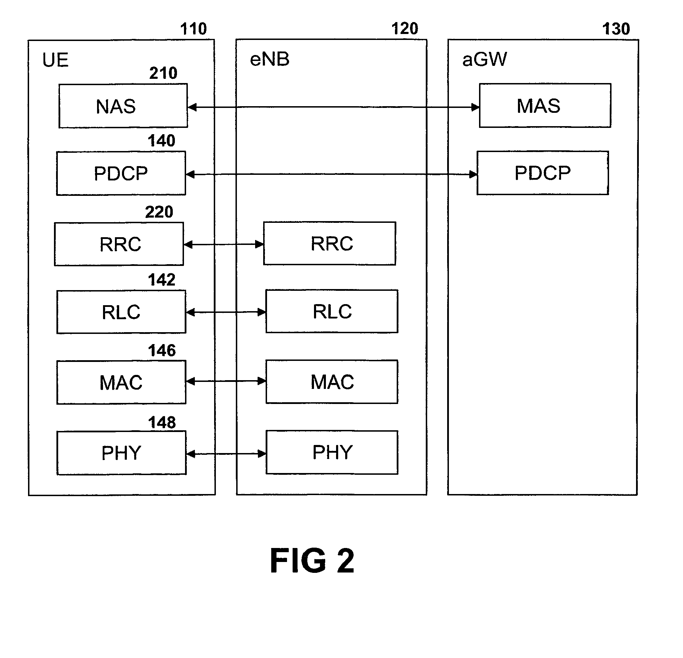

Below PDCP layer 140 is the radio link control protocol layer 142, which communicates with the radio link control protocol layer 142 on the eNB 120. As will be appreciated, communication occurs through the physical layer in protocol stacks such as those illustrated in Figures 1 and 2. However, packets from the RLC layer 142 of the UE are interpreted by the RLC layer 142 on the eNB 120.

Below RLC layer 142 is the medium access control (MAC) data communication protocol layer 146. As will be appreciated by those skilled in the art, the RLC and MAC protocols form the data link sublayers of the UMTS and LTE radio interface and reside on the Node B (or eNB in LTE) and user equipment.

The layer 1 (L1) LTE (physical layer 148) is below the RLC/MAC layers 144 and 146. This layer is the physical layer for communications.

Referring to Figure 2, Figure 2 illustrates the LTE control plane protocol architecture. Similar reference numerals to those used in Figure 1 will be used in Figure 2. Specifically, UE 110 communicates with eNB 120 and aGW 130. Further, physical layer 148, MAC layer 146, RLC layer 142 and PDCP layer 140 exist within Figure 2.

Figure 2 also shows the non-access stratum (NAS) layer 210. As will be appreciated, NAS layer 210 could include mobility management and session management.

The radio resource control protocol layer (RRC) 220, is the part of the protocol stack that is responsible for the assignment, configuration and release of radio resources between the UE and the E-UTRAN (Evolved universal terrestrial radio access network). The basic functionalities of RRC protocol for LTE is described in the 3GPP TR25.813 specifications.

As will be appreciated by those skilled in the art, in UMTS, automatic repeat request (ARQ) functionality is carried out within the RLC layer which resides in the radio network controller (RNC). Long Term Evolution (LTE) moves the ARQ functionality from the RNC to eNB where a tighter interaction may exist between the ARQ and the HARQ (within the MAC layer, also located in the eNB).

In HSDPA and E-DCH, an RLC SDU is segmented in a series of equally sized RLC PDUs (e.g. 42 octets) and given to the MAC layer for transmission over the air interface. The MAC usually multiplexes multiple RLC PDUs in to a MAC-PDU. If a MAC PDU cannot be delivered, after a certain number of tries the transmission of that MAC-PDU is abandoned. On the receiver side, the MAC layer de-multiplexes the received MAC-PDU in to multiple RLC-PDUs. If any missing RLC-PDUs are detected, the receiving side notifies the transmitting side using a STATUS message to request retransmission of the missing RLC PDUs. This is a relatively lengthy process.

In LTE, instead of abandoning the failed MAC level retransmission, resending after re-segmentation is currently being studied in order to greatly reduce latencies and increase data throughput. The issue is when and how to re-segment.

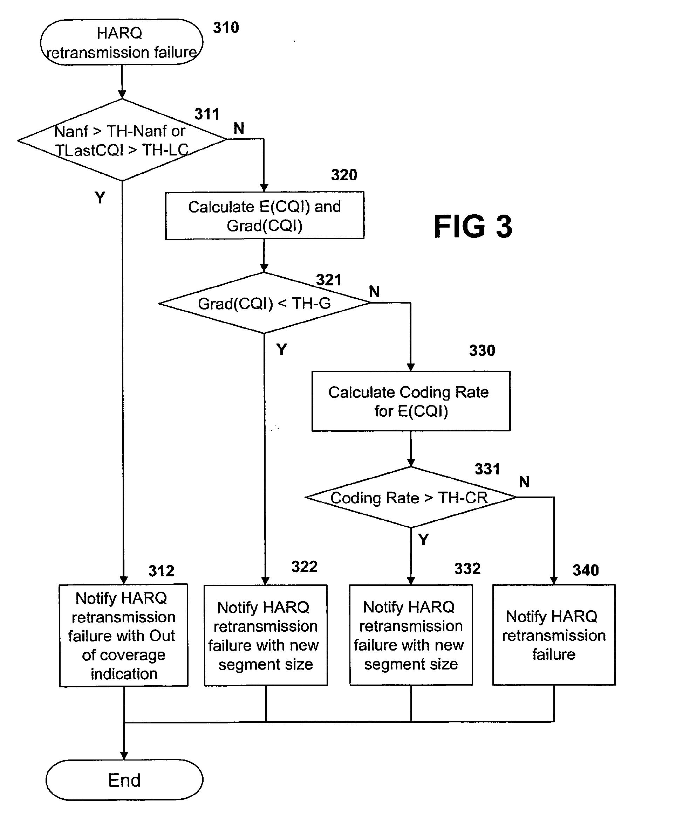

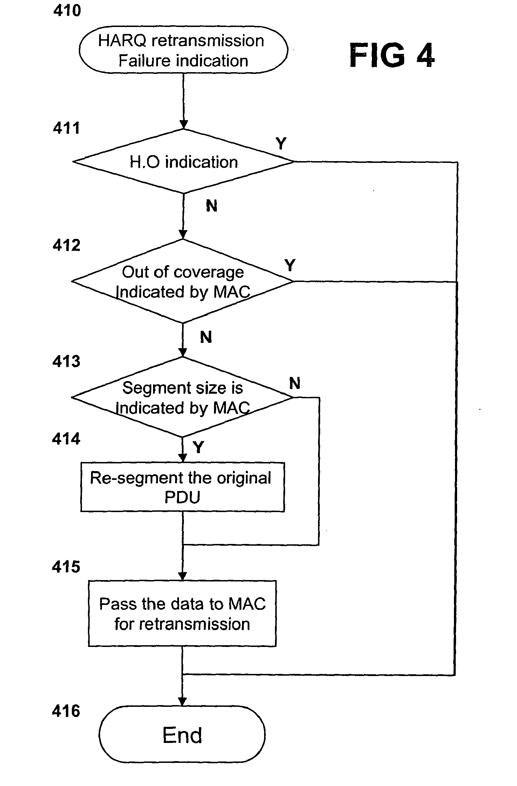

Referring to Figures 3 and 4, an overview of a method according to the present application is presented.

On HARQ retransmission failure, there are three choices in handling the error:
1) Do nothing - this means relying on the polling and status report functions of the ARQ function to recover the error. This option should be chosen when handover is expected or the receiver is considered to be out of radio coverage;
2) Re-segment and retransmit immediately - the failed data unit is re-segmented into a more appropriate size according to the current radio conditions before the retransmission. This option should be chosen when retransmitting the original transport block is not considered to be effective due to a deteriorated channel condition and/or decreased availability of radio resources.
3) Retransmit as is immediately. This option should be chosen when choices 1) and 2) are not applicable

Figure 3 shows an exemplary flowchart of how a choice is made within MAC layer on HARQ retransmission failure. The decision will be passed to the re-segmentation and retransmission execution function (RREF) with the notification of HARQ retransmission failure. The RREF performs retransmission and/or re-segmentation according to the informed decision and handover indication from an upper layer as shown in Figure 4.

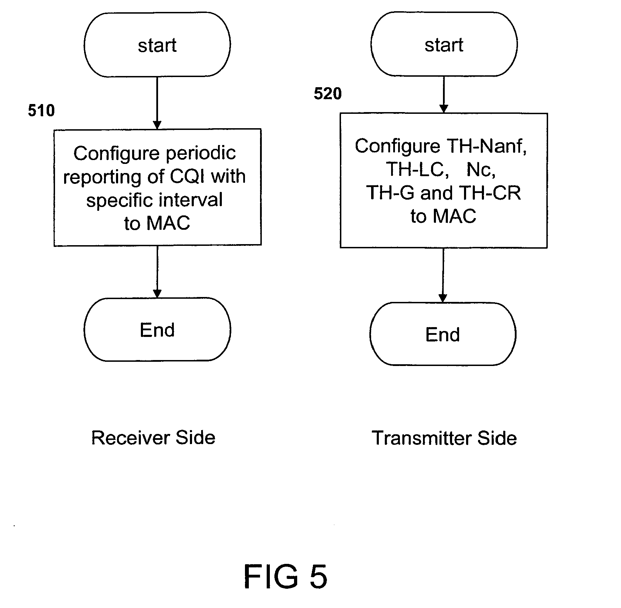

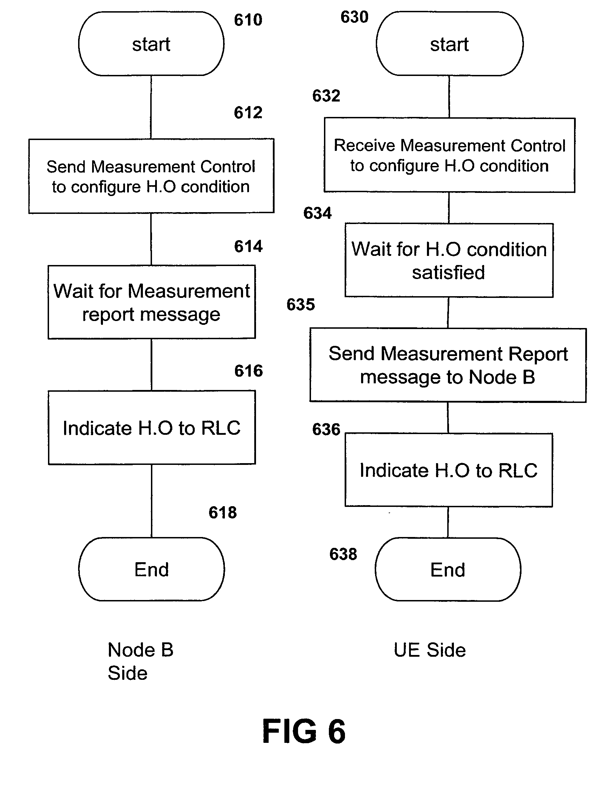

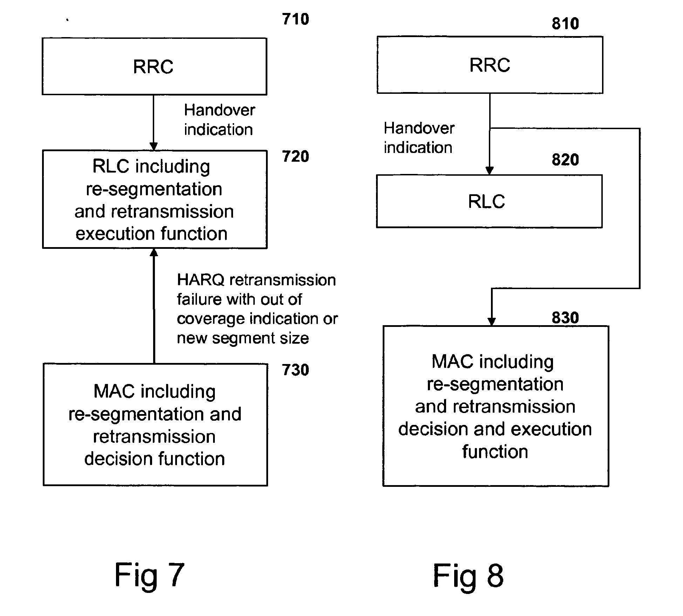

To make a choice in Figure 3, certain threshold values need to be configured. Such parameter configurations, both at the receiver and transmitter sides, are shown in Figure 5. Figure 6 describes how the handover indication is provided to the RREF. Figure 7 shows two possible protocol architectures, the first in which the RREF is included in the RLC and the second in which the RREF is included in MAC.

Referring to Figure 3, details of the decision making process are explained. When an HARQ retransmission failure occurs (maximum retransmission number is reached) at step 310, an out-of-coverage condition is examined at step 311. For example, if the number of consecutive failures in the reception of ACK/NAK from the receiver (Nanf) (if the transmitter cannot detect expected ACK/NAK response at the time when the ACK/NAK should be received from the receiver), exceeds the configured threshold value (TH-Nanf), an out of coverage indication is passed to RREF at step 312.

Alternatively, if periodic CQI reporting from the receiver side is configured, the transmitter considers the receiver is out of radio coverage if the time between the most recent CQI report from the receiver and HARQ retransmission failure (TLastCQI) is longer than the configured threshold value (TH-LC), e.g. CQI interval * N, where N is an integer value. In such case out-of-coverage indication is passed to RREF at step 312.

Furthermore if the physical layer can indicate the receiver being out of coverage, then such indication can be delivered to RREF through the MAC layer.

If the receiver is considered to be in radio coverage, as determined at step **311,** the average and gradient of most recently received CQI reports (designated E(CQI) and Grad(CQI), respectively) are calculated at step **320.** The number of CQIs used for the calculation (Nc) can be configured, for example, by the RRC. If severe deterioration of channel quality is detected, i.e. Grad(CQI) is less than a configured threshold (TH-G) in step **321,** a new segmentation size such as half of original transport block size can be provided to RREF at step **322.**

For a more accurate evaluation of channel quality, the coding rate can be calculated, as shown in step **330** to check if the original transport block size is still adequate. The derived rate is based on the assumption that the original transport block is retransmitted using the channel condition indicated by E(CQI) and using radio resources currently allocated to the receiver. If the calculated coding rate is more than a configured threshold value as determined in step **321,** e.g. 1, the original size is no longer considered appropriate. The new segment value can be calculated and passed to RREF at step **332.** The new segment size value is chosen by a calculated coding rate which is considered to be appropriate, e.g. 0.5.

If the original transport block size is still adequate for the current channel condition, only HARQ retransmission failure is passed to the RREF at step 340. In this case, the RREF will retransmit the original data as-is, without re-segmentation.

Referring to **Figure 4****,** details of the RREF are described. The RREF can be in either the RLC layer or MAC layer. On notification of HARQ retransmission failure from MAC at step **410,** the process at step **411** checks if handover is indicated. If so, no immediate retransmission is attempted because data can be lost during handover. Therefore it is better to delay the retransmission by letting ARQ retransmission procedures handle the case (i.e. polling and status reporting).

Similar to the handover case, if out of coverage is indicated, then no immediate retransmission is attempted at step 412.

If MAC indicates a new segment size at step 413 the original data is re-segmented into the specified size at step 414 and retransmitted at step 415. As will be appreciated, the last segment may not be the specified size and in such a case padding can be inserted if necessary.

If the MAC indicates no new segment size the original data is retransmitted as is at step 415. The process then ends at step 416.

Reference is now made to Figure 5. Figure 5 illustrates a flow chart for configuring threshold values for the decision made in Figure 3. At the receiver side, the MAC layer is configured to report CQI with a specified interval to the transmitter at step 510. Alternatively, at the receiver side, the MAC layer is configured to report CQl with a specified interval to the transmitter if the CQl falls below a configured level at step 510. At the transmitter side, the values of thresholds, TH-LC, TH-Nanf, TH-G and TH-CR and the number of most recent CQI reports (Nc) are configured at the step 520. Values to be configured for the UE side can be configured by RRC or layer 2 signaling.

Figure 6 illustrates the RRC indication to initiate handover for the eNB and the UE. It is currently assumed in LTE that only the eNB initiates handover.

The process for the network starts at step 610 and proceeds to step 612 in which it sends a measurement control message to configure the handover condition. The message can be a RRC message or Layer 2 level signaling.

The process then proceeds to step 614 in which it waits for a measurement report message. The message can be an RRC message or Layer 2 level signaling.

In step 616, the process indicates handover to the RLC and ends in step 618.

On the UE side, the process starts at step 630 and proceeds to step 632 in which it receives a measurement control message to configure a handover condition. The message can be an RRC message or Layer 2 level signaling.

The process then proceeds to step 634 in which it waits for a handover measurement condition to be satisfied. Once the handover measurement condition is satisfied, the process transmits measurement report message at step 635 and proceeds to step 636 in which it indicates the handover to the RLC and/or MAC [see Figure 7 and 8] and the process then ends at step638. The measurement report can be a RRC message or Layer 2 signaling.

Reference is now made to Figure 7. Figure 7 depicts the interaction between the RRC, RLC and MAC layers in accordance with Figure 3 and 4. Figure 7 shows the case where the RLC layer includes the functionality to determine whether re-segmentation should occur. Figure 8, described below, indicates the situation where the MAC layer includes the functionality to determine whether re-segmentation should occur.

In Figure 6 the RRC 610 provides RLC 620 with a handover indication. The RLC then applies the method of Figure 3 in determining that re-segmentation should not occur.

The MAC layer 630 passes the HARQ retransmission failure and channel condition status information to the RLC which enables the RLC to determine if the re-segmentation should occur.

Referring to Figure 7, Figure 7 illustrates the MAC layer having the functionality for re-segmentation. In this case, the RRC 710 passes a handover indication to RLC 720. The handover indication is then passed from the RLC 720 to MAC layer 730. MAC layer already has HARQ retransmission failure information and can use the handover indication to perform the process of Figure 3.

The above therefore addresses the issue of improving the retransmission latency further by re-segmenting data into more appropriate sizes according to radio channel conditions such as shadowing, among others. The method uses the channel condition indication based on the most recently received CQl, gradient, or coding rates of the most recently reported CQls. The process re-segments the RLC-SDU or RLC-PDU into more appropriate PDU sizes and passes them to the MAC layer for retransmission.

By comparing the number of HARQ retransmission failures within a certain period against a configured threshold, the transmitter can determine an approximation for the channel condition. If there are a large number of HARQ retransmission failures when compared to the threshold this can reflect significant deterioration in the channel condition. This is reflected by the transmitter's continued inability to successfully transmit the data based on the original channel estimates (e.g. the received CQls). If significant deterioration of channel quality is detected, a new segmentation size such as half of original transport block size can be notified to RREF.

The comparison to a threshold for the determined number of HARQ retransmission failures within a certain period and the handover indication can be used to decide if the retransmission is attempted again.

The RRC configures the MAC at the receiver side to report the CQI periodically or report the CQI periodically when CQI falls below a configured threshold. For the transmitter side it also signals TH-LC, Nc, TH-G and TH-CR to MAC. If the gradient CQI is less than TH-G re-segmentation is performed. If the coding rate for E(CQI) is greater than TH-CR, re-segmentation is performed. The size of the re-segmented PDU can depend on the coding rate.

This therefore improves the transmitter efficiency on HARQ retransmission failures by re-segmenting the PDU according to the channel condition and waiting for retransmission until the handover procedure is complete.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for handling Hybrid Automatic Repeat Request, hereafter referred to as HARQ, retransmission failure (310), HARQ retransmission failure (310) being determined by whether a maximum number of HARQ data retransmissions from a transmitter to a receiver have failed, the method comprising the steps of:
determining (311) an out-of-coverage condition:
by checking whether a time between the time of the last reception of a channel quality indicator, hereafter referred to as CQI, and the time of HARQ retransmission failure is longer than a threshold; or
if the number of consecutive failures in reception of an acknowledgement, hereafter referred to as ACK, or negative acknowledgement, hereafter referred to as NACK, from the receiver exceeds a configurable threshold value;
if an out of coverage condition is determined, ending the retransmission process; and if an out of coverage condition is not determined,
checking (321, 331) whether changes to HARQ data transmission error performance characteristics are greater than a threshold and/or a deterioration of channel conditions is less than a threshold; if yes,
resegmenting for retransmission (414) a Radio Link Control Service Data Unit, hereafter referred to as RLC-SDU, comprising Radio Link Control Protocol Data Units, hereafter referred to as RLC-PDU data, or a RLC-PDU data, into smaller PDU data sizes; and
transmitting (415) said resegmented RLC-PDU data; and if not yes, retransmitting (415) the previous RLC-PDU data.

2. The method of claim 1, wherein the method further comprises the step of, prior to the checking step, determining (411) whether a handover is indicated, and if yes, ending the retransmission process.

3. The method of claim 2, wherein the handover is indicated by the radio resource control protocol or layer 2 level signaling.

4. The method of claim 3, wherein the radio resource control protocol indicates if handover is expected when a measurement report or layer 2 level signaling is received or generated.

5. The method of any one of claims 1 to 4, wherein the method is performed at the Radio Link Control, hereafter referred to as RLC, layer (142) of a transmitter.

6. The method of any one of claims 1 to 4, wherein segmentation is performed at the medium access control, hereafter referred to as MAC, layer (146).

7. The method of claim 5 or claim 6, wherein a segment size is reported by the MAC layer (146) to the RLC layer (142).

8. The method of claim 5 or claim 6, wherein an out-of-coverage condition is reported from the MAC layer (146) to the RLC layer (142).

9. The method of any of claims 1 to 4, wherein the re-segmented data is passed from the RLC layer (142) to the MAC layer (146).

10. The method of claim 1, wherein the HARQ checks the deterioration of channel conditions by determining (321) if a gradient channel quality indicator is less than a threshold.

11. The method of claim 10, wherein, if the gradient channel quality indicator is greater or not less than a threshold, the method further comprises the steps of checking (331) whether a coding rate for a last channel quality indicator or an average of most recently received CQIs and the availability of a radio resource for the receiver is greater than a threshold,
if yes signaling (332) HARQ retransmission failure with a new segment size;
if no signaling (340) HARQ retransmission failure.

12. A transmitter for a mobile network adapted to re-segment data according to radio channel conditions based on Hybrid Automatic Repeat Request, hereafter referred to as HARQ, retransmission failure, HARQ retransmission failure being determined by whether a maximum number of HARQ data retransmissions have failed, the transmitter comprising a re-segmentation layer (142, 146) adapted to:
determine (311) whether an out-of-coverage condition is indicated, wherein the out-of-coverage condition is determined:
by checking whether a time between the time of last reception of a channel quality indicator, hereafter referred to as CQI, and the time of the HARQ retransmission failure is longer than a threshold; or
if the number of consecutive failures in reception of an acknowledgement, hereafter referred to as ACK, or negative acknowledgement, hereafter referred to as NACK, from the receiver exceeds a configurable threshold value;
if an out of coverage condition is determined, end the retransmission process; and
if an out of coverage condition is not determined,
check (321, 331) whether changes to the HARQ data transmission error performance characteristics are greater than a threshold and/or a deterioration of channel conditions is less than threshold;
if yes,
resegment for retransmission (414) a Radio Control Link Service Data Unit, herafter referred to as RLC-SDU comprising Radio Link Control Data Protocol Units, hereafter referred to as RLC-PDU data, or a RLC-PDU data, into smaller PDU data sizes; and
transmit (415) said resegmented RLC-PDU data; and if not yes, retransmit the previous RLC-PDU data.

13. The transmitter of claim 12, wherein the re-segmentation layer comprises the RLC layer (142) or the MAC layer (146).

14. The transmitter of claim 12, wherein the re-segmentation layer is further adapted to determine (411) whether a handover is indicated, and if yes, end the retransmission process.

15. The transmitter of claim 14, wherein the radio resource control protocol or layer 2 level signaling is adapted to indicate the handover.

16. The transmitter of claim 15, wherein the radio resource control protocol is adapted to indicate if handover is expected when a measurement report or layer 2 level signaling is received or generated.

17. The transmitter of claim 16, wherein if the gradient channel quality indicator is greater not less then a threshold, the transmitter is adapted to check (331) whether a coding rate for a last channel quality indicator is greater than a threshold, if yes, signal (332) HARQ retransmission failure with a new segment size;
if no signal (340) HARQ retransmission failure.

18. A communication network comprising a transmitter as claimed in any one of claims 12 to 17 and a plurality of User Equipments (110), hereafter referred to as UEs, capable of receiving packet data transmission from said transmitter.

19. A computer readable medium comprising program code executable in a computing device or system (110) to perform the method of any one of claims 1 to 11.

## Patentansprüche

1. Verfahren zum Handhaben eines Neuübertragungsfehlers (310) hybrider automatischer Wiederholungsanfragen, im Folgenden als HARQ (Hybrid Automatic Repeat Request) bezeichnet, wobei der HARQ-Neuübertragungsfehler (310) dadurch bestimmt wird, ob eine Höchstanzahl an HARQ-Daten-Neuübertragungen von einem Sender an einen Empfänger fehlgeschlagen sind, wobei in dem Verfahren:
eine Bedingung "außerhalb des Abdeckbereichs" bestimmt wird, indem geprüft wird, ob eine Zeit zwischen der Zeit des letzten Empfangs eines Kanalqualitäts-Hinweises, im Folgenden als CQI (Channel Quality Indicator) bezeichnet, und der Zeit des HARQ-Neuübertragungsfehlers länger als ein Schwellenwert ist, oder
wenn die Anzahl an aufeinanderfolgenden Fehlern im Empfang einer Bestätigung, im Folgenden als ACK (Acknowledgement) bezeichnet oder einer Negativbestätigung, im Folgenden als NACK (Negative Acknowledgement) bezeichnet, vom Empfänger einen einstellbaren Schwellenwert überschreitet,
wenn eine Bedingung "außerhalb des Abdeckbereichs" bestimmt wird, der Neuübertragungsprozess beendet wird und,
wenn eine Bedingung "außerhalb des Abdeckbereichs" nicht bestimmt wird, geprüft (321, 331) wird, ob Änderungen an HARQ-Daten-Übertragungsfehler-Performanceeigenschaften größer als ein Schwellenwert sind und/oder eine Verschlechterung von Kanalbedingungen weniger als ein Schwellenwert ist, wenn ja,
eine Funkverbindungssteuerungs-Dienstdateneinheit im Folgenden als RLC-SDU (Radio Link Control Service Data Unit) bezeichnet, mit Funkverbindungssteuerungs-Protokolldateneinheiten, im Folgenden als RLC-PDU-Datenmaterial bezeichnet, oder ein RLC-PDU-Datenmaterial zur Neuübertragung in kleinere PDU-Datengrößen neu segmentiert wird und
das neusegmentierte RLC-PDU-Datenmaterial neu übertragen (415) wird, und
wenn nicht ja, das vorhergehende RLC-PDU-Datenmaterial neu übertragen (415) wird.

2. Verfahren nach Anspruch 1, wobei in dem Verfahren vor dem Prüfschritt ferner bestimmt (411) wird, ob eine Übergabe angezeigt wird und, wenn ja, der Neuübertragungsprozess beendet wird.

3. Verfahren nach Anspruch 2, wobei die Übergabe von einem Funkquellensteuerungsprotokoll oder einer Meldung der Stufe der Schicht 2 angezeigt wird.

4. Verfahren nach Anspruch 3, wobei das Funkquellensteuerungsprotokoll anzeigt, ob eine Übergabe erwartet wird, wenn ein Messbericht oder eine Meldung der Stufe der Schicht 2 empfangen oder erzeugt wird.

5. Verfahren nach einem der Ansprüche 1 bis 4, wobei das Verfahren an der Funkverbindungssteuerungs-, im Folgenden als RLC (Radio Link Control) bezeichnet, Schicht (142) eines Senders ausgeführt wird.

6. Verfahren nach einem der Ansprüche 1 bis 4, wobei die Segmentierung an der Medienzugangssteuerungs-, im Folgenden als MAC (Medium Access Control) bezeichnet, Schicht (146) ausgeführt wird.

7. Verfahren nach Anspruch 5 oder 6, wobei von der MAC-Schicht (146) eine Segmentgröße an die RLC-Schicht (142) berichtet wird.

8. Verfahren nach Anspruch 5 oder 6, wobei die Bedingung "außerhalb des Abdeckbereichs" von der MAC-Schicht (146) an die RLC-Schicht (142) berichtet wird.

9. Verfahren nach einem der Ansprüche 1 bis 4, wobei das neusegmentierte Datenmaterial von der RLC-Schicht (142) an die MAC-Schicht (146) weitergereicht wird.

10. Verfahren nach Anspruch 1, wobei die HARQ die Verschlechterung von Kanalbedingungen prüft, indem sie bestimmt (321), ob ein abfallender Kanalqualitäts-Hinweis weniger als ein Schwellenwert ist.

11. Verfahren nach Anspruch 10, wobei, wenn der abfallender Kanalqualitäts-Hinweis größer oder nicht weniger als ein Schwellenwert ist, in dem Verfahren ferner geprüft (331) wird, ob eine Kodierrate für den letzten Kanalqualitäts-Hinweis oder ein Durchschnitt der zuletzt empfangenden CQIs und die Verfügbarkeit einer Funkquelle für den Empfänger größer als ein Schwellenwert ist,
wenn ja, HARQ-Neuübermittlungsfehler mit einer neuen Segmentgröße mitgeteilt (332) wird,
wenn nein, ein HARQ-Neuübertragungsfehler mitgeteilt 340 wird.

12. Sender für ein Mobilnetzwerk, das dazu ausgelegt ist, Daten nach Funkkanalbedingungen auf Grundlage eines Neuübertragungsfehlers (310) hybrider automatischer Wiederholungsanfragen, im Folgenden als HARQ (Hybrid Automatic Repeat Request) bezeichnet, neu zu segmentieren, wobei der HARQ-Neuübertragungsfehler (310) **dadurch** bestimmt wird, ob eine Höchstanzahl an HARQ-Daten-Neuübertragungen fehlgeschlagen sind, wobei der Sender eine Neusegmentierschicht (142, 146) enthält, die dazu ausgelegt ist:
zu bestimmen (311), ob eine Bedingung "außerhalb des Abdeckbereichs" angezeigt ist, wobei die Bedingung "außerhalb des Abdeckbereichs" bestimmt wird,
indem geprüft wird, ob eine Zeit zwischen der Zeit des letzten Empfanges eines Kanalqualitäts-Hinweises, im Folgenden als CQI (Channel Quality Indicator) bezeichnet, und der Zeit des HARQ-Neuübertragungsfehlers länger als ein Schwellenwert ist, oder
wenn die Anzahl an aufeinanderfolgenden Fehlern im Empfang einer Bestätigung, im Folgenden als ACK (Acknowledgement) bezeichnet, oder einer Negativbestätigung, im Folgenden als NACK (Negative Acknowledgement) bezeichnet, vom Empfänger einen einstellbaren Schwellenwert überschreitet, wenn eine Bedingung "außerhalb des Abdeckbereichs" bestimmt wird, den Neuübertragungsprozess zu beenden und,
wenn eine Bedingung "außerhalb des Abdeckbereichs" nicht bestimmt wird, zu prüfen (321, 331), ob Änderungen an HARQ-Daten-Übertragungsfehler-Performanceeigenschaften größer als ein Schwellenwert sind und/oder eine Verschlechterung von Kanalbedingungen weniger als ein Schwellenwert sind,
wenn ja,
eine Funkverbindungssteuerungs-Dienstdateneinheit, im Folgenden als RLC-SDU (Radio Link Control Service Data Unit) bezeichnet, mit Funkverbindungssteuerungs-Datenprotokolleinheiten, im Folgenden als RLC-PDU-Datenmaterial bezeichnet, oder ein RLC-PDU-Datenmaterial zur Neuübertragung in kleinere PDU-Datengrößen neu zu segmentieren und das neusegmentierte RLC-PDU-Datenmaterial zu übertragen (415), und
wenn nicht ja, das vorhergehende RLC-PDU-Datenmaterial neu zu übertragen (415).

13. Sender nach Anspruch 12, wobei die Neusegmentierschicht die RLC-Schicht (142) oder die MAC-Schicht (146) enthält.

14. Sender nach Anspruch 12, wobei die Neusegmentierschicht ferner dazu ausgelegt ist zu bestimmen (411), ob eine Übergabe angezeigt ist, und wenn ja, den Neuübertragungsprozess zu beenden.

15. Sender nach Anspruch 14, wobei das Funkquellensteuerungsprotokoll oder die Mitteilung der Stufe der Schicht 2 dazu geeignet ist, die Übergabe anzuzeigen.

16. Sender nach Anspruch 15, wobei das Funkquellensteuerungsprotokoll dazu geeignet ist anzuzeigen, ob eine Übergabe erwartet ist, wenn ein Messbericht oder eine Mitteilung der Stufe der Schicht 2 empfangen oder erzeugt ist.

17. Sender nach Anspruch 16, wobei, wenn der abfallende Kanalqualitäts-Hinweis größer/nicht weniger als ein Schwellenwert ist, der Sender dazu geeignet ist zu überprüfen (331), ob eine Kodierrate für einen letzten Kanalqualitäts-Hinweis größer als ein Schwellenwert ist,
wenn ja, einen HARQ-Neuübertragungsfehler mit einer neuen Segmentgröße mitzuteilen (332),
wenn nein, einen HARQ-Neuübertragungsfehler mitzuteilen (340).

18. Kommunikationsnetzwerk mit einem Sender nach einem der Ansprüche 12 bis 17 und mehreren Benutzergeräten (110), im Folgenden als UEs (User Equipments) bezeichnet, die zum Empfang von Paketdatenübertragungen vom Sender fähig sind.

19. Computerlesbares Medium mit in einer Rechenvorrichtung oder in einem System (110) ausführbarem Programmcode, um das Verfahren nach einem der Ansprüche 1 bis 11 auszuführen.

## Revendications

1. Procédé pour le traitement d'une demande de Répétition Automatique Hybride, ci-après désignée HARQ, en cas d'échec de la retransmission (310), l'échec de la retransmission HARQ (310) étant déterminé par le fait de savoir si un nombre maximum de retransmissions de données HARQ d'un émetteur vers un récepteur ont échoué, le procédé comprenant les étapes consistant à :
déterminer (311) une condition de sortie de zone de couverture :
en vérifiant si un temps séparant l'instant de la dernière réception d'un indicateur de qualité du canal, ci-après désigné CQI, et l'instant de l'échec de la retransmission HARQ est supérieur à un seuil ; ou
si le nombre d'échecs consécutifs de la réception d'un accusé de réception, ci-après désigné ACK, ou d'un accusé de réception négatif, ci-après désigné NACK, en provenance du récepteur, dépasse une valeur de seuil pouvant être configurée ;
si une condition de sortie de zone de couverture est déterminée, interrompre le processus de retransmission ; et
si une condition de sortie de zone de couverture n'est pas déterminée,
vérifier (321, 331) si les modifications de caractéristiques de performances d'erreurs de retransmission de données HARQ sont supérieures à un seuil et/ou si une dégradation d'état du canal est inférieure à un seuil ;
si oui,
resegmenter pour la retransmission (414) une unité de données de service de contrôle de liaison radio, ci-après désignée RLC-SDU, comprenant des unités de données de protocole de contrôle de liaison radio, ci-après désignées données RLC-PDU, ou une donnée RLC-PDU, en des tailles de données PDU plus petites ; et
transmettre (415) lesdites données RLC-PDU resegmentées ; et
si non, retransmettre (415) les données RLC-PDU précédentes.

2. Procédé selon la revendication 1, dans lequel le procédé comprend en outre l'étape consistant à, avant l'étape de vérification, déterminer (411) si un transfert est indiqué, et si oui, interrompre le processus de retransmission.

3. Procédé selon la revendication 2, dans lequel le transfert est indiqué par le protocole de contrôle de ressource radio ou par une signalisation au niveau de la couche 2.

4. Procédé selon la revendication 3, dans lequel le protocole de contrôle de ressource radio indique si un transfert est attendu lorsqu'un rapport de mesure ou lorsqu'une signalisation au niveau de la couche 2 est reçu ou généré.

5. Procédé selon l'une quelconque des revendications 1 à 4, dans lequel le procédé est effectué au niveau de la couche (142) de Contrôle de Liaison Radio, ci-après désignée RLC d'un émetteur.

6. Procédé selon l'une quelconque des revendications 1 à 4, dans lequel la segmentation est effectuée au niveau de la couche (146) de contrôle d'accès au support, désignée ci-après MAC.

7. Procédé selon la revendication 5 ou la revendication 6, dans lequel une taille de segment est indiquée par la couche MAC (146) à la couche RLC (142).

8. Procédé selon la revendication 5 ou la revendication 6, dans lequel une condition de sortie de zone de couverture est indiquée de la couche MAC (146) à la couche RLC (142).

9. Procédé selon l'une quelconque des revendications 1 à 4, dans lequel la donnée resegmentée est admise à passer de la couche RLC (142) à la couche MAC (146).

10. Procédé selon la revendication 1, dans lequel la demande HARQ vérifie la dégradation de l'état du canal en déterminant (321) si un indicateur de qualité de canal à gradient est inférieur à un seuil.

11. Procédé selon la revendication 10, dans lequel, si l'indicateur de qualité du canal à gradient est supérieur ou non inférieur à un seuil, le procédé comprend en outre les étapes consistant à vérifier (331) si un taux de codage correspondant à un indicateur de qualité du dernier canal ou à une moyenne des indicateurs CQI reçus le plus récemment et si la disponibilité d'une ressource radio destinée au récepteur est supérieure à un seuil,
si oui, à signaler (332) un échec de la retransmission HARQ avec une nouvelle taille de segment ;
si non, à signaler (340) un échec de la retransmission HARQ.

12. Emetteur destiné à un réseau mobile apte à resegmenter les données en fonction d'un état du canal radio sur la base d'un échec de la retransmission d'une demande de répétition automatique hybride, ci-après désignée HARQ, l'échec de la retransmission HARQ étant déterminé par le fait de savoir si un nombre maximum de retransmissions de données HARQ a échoué, l'émetteur comprenant une couche de re-segmentation (142, 146) apte à :
déterminer (311) si une condition de sortie de zone de couverture est indiquée, la condition de sortie de zone de couverture étant déterminée :
en vérifiant si un temps compris entre l'instant de la dernière réception d'un indicateur de qualité du canal, ci-après désigné CQI, et l'instant de l'échec de la retransmission de la demande HARQ est supérieur à un seuil ; ou
si le nombre d'échecs consécutifs lors de la réception d'un accusé de réception, ci-après désigné ACK, ou d'un accusé de réception négatif, ci-après désigné NACK, en provenance du récepteur, dépasse une valeur de seuil pouvant être configurée ;
si une condition de sortie de zone de couverture est déterminée, interrompre le processus de retransmission ; et
si une condition de sortie de zone de couverture n'est pas déterminée,
vérifier (321, 331) si des modifications des caractéristiques de performances d'erreurs de transmission de données HARQ sont supérieures à un seuil et/ou si une dégradation de l'état du canal est inférieure à un seuil ;
si oui :
re-segmenter pour la retransmission (414) une unité de données de service de liaison de contrôle radio, ci-après désignée RLC-SDU, comprenant des unités de protocole de données de contrôle de liaison radio, ci-après désignées données RLC-PDU, ou une donnée RLC-PDU, en des tailles de données PDU plus petites ; et
transmettre (415) lesdites données RLC-PDU resegmentées ; et
si non, retransmettre les données RLC-PDU précédentes.

13. Emetteur selon la revendication 12, dans lequel la couche de re-segmentation comprend la couche RLC (142) ou la couche MAC (146).

14. Emetteur selon la revendication 12, dans lequel la couche de re-segmentation est en outre apte à déterminer (411) si un transfert est indiqué, et si oui, à interrompre le processus de retransmission.

15. Emetteur selon la revendication 14, dans lequel le protocole de contrôle de ressource radio ou la signalisation au niveau de la couche 2 est apte à indiquer le transfert.

16. Emetteur selon la revendication 15, dans lequel le protocole de contrôle de ressource radio est apte à indiquer si un transfert est attendu lorsqu'un rapport de mesure ou lorsqu'une signalisation au niveau de la couche 2 est reçu ou généré.

17. Emetteur selon la revendication 16, dans lequel, si l'indicateur de qualité du canal à gradient est supérieur ou non inférieur à un seuil, l'émetteur est apte à vérifier (331) si un taux de codage correspondant à un indicateur de qualité du dernier canal est supérieur à un seuil,
si oui, signaler (332) un échec de la retransmission HARQ avec une nouvelle taille de segment ;
si non, signaler (340) un échec de la retransmission HARQ.

18. Réseau de communication comprenant un émetteur selon l'une quelconque des revendications 12 à 17 et une pluralité d'équipements utilisateurs (110), désignés ci-après UE, capables de recevoir une transmission de données par paquets en provenance dudit émetteur.

19. Support lisible par ordinateur comprenant un code de programme exécutable sur un dispositif ou un système informatique (110) pour mettre en oeuvre le procédé selon l'une quelconque des revendications 1 à 11.
